# EUROPÄISCHE PATENTSCHRIFT

(11) **EP 4 356 030 B1**
(45) Veröffentlichungstag und Bekanntmachung des Hinweises auf die Patenterteilung: **20.08.2025**
(21) Anmeldenummer: 22732550.3
(22) Anmeldetag: 13.06.2022
(51) Int. Cl.: F16K 31/06, F16K 31/40

(54) **ABSPERRVENTIL FÜR WASSERSTOFFTANKSYSTEME, DRUCKGASBEHÄLTER SOWIE WASSERSTOFFTANKSYSTEM**
SHUTOFF VALVE FOR HYDROGEN TANK SYSTEMS, COMPRESSED GAS CONTAINER, AND HYDROGEN TANK SYSTEM
VANNE D'ARRÊT POUR SYSTÈMES DE RÉSERVOIR D'HYDROGÈNE, RÉCIPIENT DE GAZ COMPRIMÉ ET SYSTÈME DE RÉSERVOIR D'HYDROGÈNE

(30) Priorität: 14.06.2021 DE 102021205990
(43) Veröffentlichungstag der Anmeldung: 24.04.2024
(73) Patentinhaber: Robert Bosch GmbH, 70442 Stuttgart (DE)
(72) Erfinder: SCHAICH, Udo, 70378 Stuttgart (DE); RAU, Andreas, 70469 Stuttgart (DE); SOUBARI, Joachim, 76275 Ettlingen (DE)
(86) Internationale Anmeldenummer: PCT/EP2022/065936
(87) Internationale Veröffentlichungsnummer: WO 2022/263337

(56) Entgegenhaltungen:
- WO-A1-2020/052834
- WO-A1-2020/120072
- DE-A1- 102017 216 556
- US-A1- 2020 292 091

## Beschreibung

Die Erfindung betrifft ein Absperrventil für Wasserstofftanksysteme mit mindestens einem Druckgasbehälter. Ferner betrifft die Erfindung einen Druckgasbehälter für ein Wasserstofftanksystem mit einem erfindungsgemäßen Absperrventil sowie ein Wasserstofftanksystem mit mindestens einem Druckgasbehälter und einem erfindungsgemäßen Absperrventil.

### Stand der Technik

Bekannt sind mobile Wasserstofftanksysteme für Kraftfahrzeuge zur Umsetzung des Wasserstoffs in Brennstoffzellen oder in Wasserstoff-Verbrennungsmotoren. Für den Fall eines Leitungsbruchs oder Unfalls müssen die Wasserstofftanks mit Hilfe von Absperrventilen verschlossen werden, um einen unkontrollierten Wasserstoffaustritt zu verhindern. Die Absperrventile sind daher als selbsttätig stromlos schließende Ventile entsprechend den gültigen Richtlinien auszulegen.

Die selbsttätige Schließfunktion wird üblicherweise mit Hilfe einer Feder realisiert, die in Schließrichtung direkt oder indirekt auf einen hin und her beweglichen Ventilkolben des Absperrventils wirkt.

Die Öffnungsfunktion wird in der Regel indirekt über ein elektromagnetisch betätigbares Steuerventil realisiert. Durch Öffnen des Steuerventils kann ein am Ventilkolben des Hauptventils anliegender Steuerdruck abgesenkt werden, der auf den Ventilkolben eine schließende Kraft ausübt. Mit zunehmendem Druckabfall vermag somit das Hauptventil zu öffnen. Der Druckabfall kann über einen vergleichsweise kleinen Sitzdurchmesser des Steuerventils realisiert werden, so dass das Öffnen des Steuerventils eine vergleichsweise geringe Kraft erfordert. Zugleich kann der Sitzdurchmesser des Hauptventils vergrößert werden, um große Volumenströme zu erzielen, was in einem Wasserstofftanksystem von Vorteil ist. Wird jedoch die Absteuermenge des Steuerventils dem Ventilauslass des Hauptventils zugeführt, besteht im voll geöffneten Zustand die Gefahr, dass überall der gleiche Druck herrscht und das Absperrventil aufgrund der selbsttätigen Schließfunktion zufällt. Mit Lastabnahme sinkt dann der Druck wieder und das Absperrventil öffnet. Dieses permanente Öffnen und Schließen des Absperrventils führt bei den üblichen Kunststoff- oder Elastomersitzen im Wasserstoffbereich zu einem erhöhten Verschleiß im Sitzbereich.

Die WO 2020/120072 A1 beschreibt beispielsweise solch ein Absperrventil.

Ausgehend von dem vorstehend genannten Stand der Technik liegt der vorliegenden Erfindung die Aufgabe zugrunde, ein Absperrventil für Wasserstofftanksysteme anzugeben, das ein kontrolliertes Öffnungsverhalten aufweist und zugleich möglichst wenig Bauraum benötigt, insbesondere, um die Integration des Absperrventils in den Flaschenhals eines als Druckgasflasche ausgebildeten Druckgasbehälters zu ermöglichen.

Zur Lösung der Aufgabe wird das Absperrventil mit den Merkmalen des Anspruchs 1 angegeben. Vorteilhafte Weiterbildungen der Erfindung sind den Unteransprüchen zu entnehmen. Darüber hinaus werden ein Druckgasbehälter mit einem erfindungsgemäßen Absperrventil sowie ein Wasserstofftanksystem mit mindestens einem Druckgasbehälter sowie einem erfindungsgemäßen Absperrventil vorgeschlagen.

### Offenbarung der Erfindung

Das vorgeschlagene Absperrventil umfasst ein Hauptventil und ein Steuerventil zur Steuerung des Hauptventils. Das Hauptventil weist dabei einen mit einem Ventilsitz zusammenwirkenden, hin und her beweglichen Ventilkolben auf, der an seinem dem Ventilsitz abgewandten Ende einen Steuerraum begrenzt, der über eine Zulaufdrossel an ein Speichervolumen des Druckgasbehälters angeschlossen und über eine Ablaufdrossel, je nach Schaltstellung des Steuerventils, mit einem Gasauslass verbindbar ist. Das Hauptventil weist dabei ferner eine Magnetspule auf, mittels welcher eine auf den Ventilkolben wirkende Öffnungs- und/oder Haltekraft erzeugbar ist. Erfindungsgemäß sind das Hauptventil und das Steuerventil koaxial angeordnet und durch einen Axialspalt voneinander getrennt, in dem ein vorzugsweise scheibenförmiger Körper aus einem nichtmagnetischen Material aufgenommen ist. Der Körper dient der magnetischen Trennung zwischen dem Magnetkreis des Steuerventils und der im Ventilgehäuse aufgenommenen Magnetspule zur Erzeugung der auf den Ventilkolben wirkenden Haltekraft.

Mit Hilfe der auf den Ventilkolben des Hauptventils wirkenden Öffnungs- und/oder Haltekraft können die eingangs beschriebenen Nachteile der indirekten Steuerung behoben werden. Insbesondere kann ein Zufallen des Hauptventils verhindert werden, wenn in voll geöffnetem Zustand überall der gleiche Druck herrscht. Mit Hilfe der auf den Ventilkolben einwirkenden Magnetspule kann somit die selbsttätige Schließfunktion des Absperrventils temporär außer Kraft gesetzt werden.

Da eine Haltekraft der Magnetspule erst benötigt wird, wenn das Hauptventil weitgehend entdrosselt ist, reicht eine vergleichsweise kleine Haltekraft aus. Aus dem Hub des Ventilkolbens resultiert zudem ein minimaler Luftspalt, so dass eine kleine Magnetspule einsetzbar ist. Die geringe Baugröße der Magnetspule ermöglicht die gewünschte Miniaturisierung des Absperrventils.

Für den Fall eines vollständigen Druckausgleichs zwischen dem Gasauslass des Absperrventils und dem Speicherdruck im Druckgasbehälter ist keine Druckabsenkung im Steuerraum und somit auch kein pneumatisches Öffnen möglich. Vorteilhafterweise ist daher die Magnetkraft am Hauptventil so groß dimensioniert, dass das Hauptventil gegen die Schließkraft einer Feder magnetisch geöffnet werden kann, was eine definierte Offenstellung des Hauptventils während des gesamten Betriebs ermöglicht. Je nach Auslegungsziel kann auch eine Kombination von pneumatischem und magnetischem Öffnen am Hauptventil vorteilhaft umgesetzt werden.

Gemäß einer bevorzugten Ausführungsform der Erfindung ist die Magnetspule ringförmig ausgeführt und koaxial zum Ventilkolben des Hauptventils angeordnet. Mit Hilfe der Magnetspule kann somit ein Magnetfeld aufgebaut werden, dessen Magnetkraft gleichmäßig auf den Ventilkolben einwirkt.

Ferner bevorzugt liegt die Magnetspule dem Ventilkolben am Steuerraum gegenüber. Das heißt, dass die Magnetspule in einem axialen Abstand zum Ventilkolben angeordnet ist. Durch den Hub des Ventilkolbens verkleinert sich der Abstand und damit der Luftspalt zwischen der Magnetspule und dem Ventilkolben. Bei maximalem Hub ist somit der Luftspalt minimal und es bedarf nur einer geringen Kraft, um den Ventilkolben in dieser Position zu halten.

Vorteilhafterweise ist die Magnetspule in ein Ventilgehäuse integriert, das den Steuerraum begrenzt und die Ablaufdrossel ausbildet. Die Magnetspule kann somit dicht am Steuerraum angeordnet werden. Ferner kann der Raum um die Ablaufdrossel herum zur Aufnahme der Magnetspule genutzt werden. Bevorzugt ist daher die Ablaufdrossel durch die Magnetspule hindurchgeführt. Auf diese Weise wird eine besonders kompakt bauende Anordnung geschaffen.

Zum sicheren Schließen des Hauptventils wird vorgeschlagen, dass der Ventilkolben des Hauptventils in Richtung des Ventilsitzes von der Federkraft einer Feder beaufschlagt ist. Die Feder ist hierzu bevorzugt einerseits am Ventilkolben, andererseits an einer Dichthülse abgestützt, die zur Begrenzung des Steuerraums das dem Steuerraum zugewandte Ende des Ventilkolbens umgibt. Der Steuerraum wird somit bevorzugt in axialer Richtung einerseits durch den Ventilkolben, andererseits durch das die Magnetspule aufnehmende Ventilgehäuse sowie in radialer Richtung durch die Dichthülse begrenzt. Das Hauptventil kann demzufolge vergleichsweise einfach aufgebaut sein. Die Dichthülse ermöglicht zudem in einfacher Weise den Ausgleich von fertigungs- und/oder montagebedingten Toleranzen, insbesondere von Desachsierungsfehlern.

Die Zulaufdrossel, über die der Steuerraum an ein Speichervolumen des Druckgasbehälters angeschlossen ist, gleicht die durch die Schließbewegung des Ventilkolbens bewirkte Volumenvergrößerung des Steuerraums aus und sorgt somit für ein sicheres Schließverhalten des Hauptventils. Zur Reduzierung der Teilezahl kann die Zulaufdrossel durch einen Führungsspalt gebildet werden, über den der Ventilkolben des Hauptventils geführt ist. Zur Senkung der Genauigkeitsanforderungen an die Führung kann im Bereich der Führung ein Dichtelement angeordnet sein. Die Zulaufdrossel wird in diesem Fall separat durch eine fluidisch leitende Verbindung, insbesondere eine Drosselbohrung, ausgeführt sein.

Das Steuerventil ist vorteilhafterweise elektromagnetisch betätigbar und weist eine ringförmige Magnetspule zur Einwirkung auf einen Magnetanker auf, der mit einem Ventilelement des Steuerventils gekoppelt ist oder ein Ventilelement ausbildet. Sofern der Magnetanker und das Ventilelement separate Bauteile ausbilden, die lediglich gekoppelt sind, können unterschiedliche Materialien zur Ausbildung der Bauteile verwendet werden. Somit kann der jeweiligen Funktion entsprechend jeweils das optimale Material gewählt werden. Bildet der Magnetanker zugleich das Ventilelement aus, kann die Bauteilzahl reduziert werden und damit die Ausbildung des Steuerventils vereinfacht werden.

Analog kann auch der Ventilkolben des Hauptventils durch einen Magnetanker ausgebildet werden oder mit einem Magnetanker gekoppelt sein, um mittels der dem Ventilkolben zugeordneten Magnetspule auf diesen einzuwirken.

Zum Schließen des Steuerventils umfasst dieses bevorzugt eine Schließfeder, so dass das Schließen mittels Federkraft bewirkt wird. Die Schließfeder ist hierzu bevorzugt am Magnetanker des Steuerventils axial abgestützt. Ferner bevorzugt ist bzw. sind der Magnetanker und das gegebenenfalls mit dem Magnetanker gekoppelte Ventilelement mittels der Federkraft der Schließfeder in Richtung eines Dichtsitzes axial vorgespannt, der durch das den Steuerraum begrenzende Ventilgehäuse ausgebildet wird. Auf diese Weise kann auch in axialer Richtung eine kompakte Anordnung geschaffen werden.

Des Weiteren wird ein Druckgasbehälter für ein Wasserstofftanksystem mit einem erfindungsgemäßen Absperrventil vorgeschlagen. Da das Absperrventil einen geringen Bauraumbedarf hat, kann es einfach in den Druckgasbehälter integriert werden. Vorzugsweise ist das Absperrventil im Bereich eines Behälterauslasses des Druckgasbehälters angeordnet. Im Fall eines Leitungsbruchs oder Unfalls kann dann mit Hilfe des Absperrventils der Druckgasbehälter verschlossen werden, so dass kein Gas unkontrolliert austritt. Der Bereich des Behälterauslasses kann insbesondere die Form eines Flaschenhalses aufweisen. Ein derart geformter Behälterauslass ist besonders stabil und damit als Einbauort für das Absperrventil besonders gut geeignet.

Durch die Integration eines erfindungsgemäßen Absperrventils in einen Druckgasbehälter werden einerseits die Sicherheitsanforderungen erfüllt, da dieses selbsttätig schließt. Andererseits werden große Wasserstoffvolumenströme über den Ventilsitz des Hauptventils ermöglicht, da dieses indirekt gesteuert wird, und zwar mittels eines elektromagnetisch betätigbaren Steuerventils. Durch die vorgesehene weitere Magnetspule kann zudem eine Haltekraft erzeugt werden, die insbesondere im vollständig geöffneten Zustand ein unerwünschtes Zufallen des Absperrventils verhindert. Da lediglich eine geringe Haltekraft benötigt wird, kann eine Magnetspule geringer Baugröße eingesetzt werden, was eine miniaturisierte Ausführung des Absperrventils begünstigt.

Darüber hinaus wird ein Wasserstofftanksystem mit mindestens einem Druckgasbehälter und einem erfindungsgemäßen Absperrventil zum Absperren des Druckgasbehälters vorgeschlagen. Vorteilhafterweise umfasst das Wasserstofftanksystem mehrere gleichartige Druckgasbehälter, von denen jeder mit einem erfindungsgemäßen Absperrventil ausgestattet ist. Die Druckgasbehälter können somit bei Bedarf unabhängig voneinander abgesperrt und ausgetauscht werden.

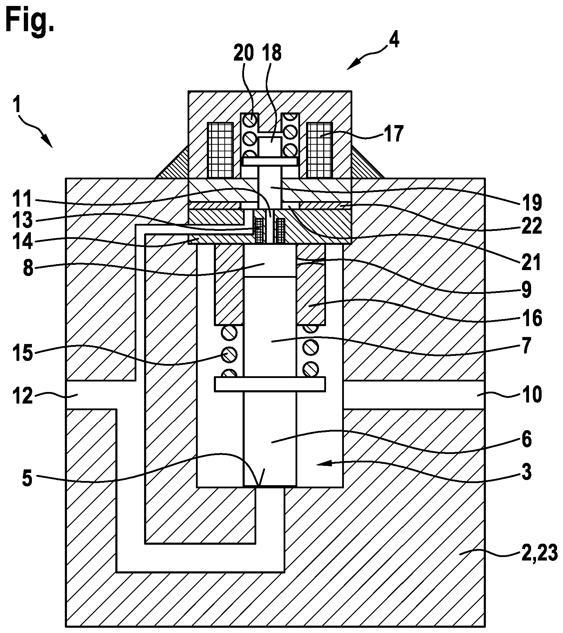

Eine bevorzugte Ausführungsform der Erfindung wird nachfolgend anhand der beigefügten Zeichnung näher erläutert. Diese zeigt einen schematischen Längsschnitt durch ein erfindungsgemäßes Absperrventil in Schließstellung.

### Ausführliche Beschreibung der Zeichnung

Das in der Figur dargestellte Absperrventil 1 für einen Druckgasbehälter 2 weist ein Hauptventil 3 und ein Steuerventil 4 auf. Das Steuerventil 4 ist elektromagnetisch betätigbar.

Das Hauptventil 3 weist einen hin und her beweglichen Ventilkolben 6 auf, der mit einem Ventilsitz 5 zusammenwirkt. Das dem Ventilsitz 5 abgewandte Ende 7 des Ventilkolben 6 ist in einer Dichthülse 16 aufgenommen, die gemeinsam mit dem Ventilkolben 6 sowie einem Ventilgehäuse 14 einen Steuerraum 8 begrenzt. Die Dichthülse 16 wird mittels der Federkraft einer Feder 15 gegen das Ventilgehäuse 14 axial vorgespannt. Zugleich drückt die Federkraft der Feder 15 den Ventilkolben 6 gegen den Ventilsitz 5.

Zum Öffnen des Hauptventils 3 muss zunächst das Steuerventil 4 geöffnet werden. Hierzu wird eine Magnetspule 17 bestromt, so dass ein Magnetfeld aufgebaut wird, dessen Magnetkraft auf einen hin und her beweglichen Magnetanker 18 wirkt, der mit einem Ventilelement 19 des Steuerventils 4 gekoppelt ist. Die Bewegung des Magnetankers 18 öffnet somit das Steuerventil 4. Bei geöffnetem Steuerventil 4 strömt Gas aus dem Steuerraum 8 über eine im Ventilgehäuse 14 ausgebildete Ablaufdrossel 11 ab, so dass der Druck im Steuerraum 8 sinkt und die am Ventilkolben 6 anliegenden Kräfteverhältnisse ein Öffnen des Hauptventils 3 ermöglichen. Über den Ventilsitz 5 strömt dann Gas aus einem Speichervolumen 10 des Druckgasbehälters 2 in einem Gasauslass 12 ab. Da die Absteuermenge des Steuerventils 4 ebenfalls in den Gasauslass 12 eingeleitet wird, stellt sich bei voll geöffnetem Absperrventil 1 überall der gleiche Druck ein. Das heißt, dass auch der Druck im Steuerraum 8 wieder steigt. Um ein unerwünschtes Zufallen des Absperrventils 1 zu verhindern, ist in das Ventilgehäuse 14 eine weitere Magnetspule 13 integriert, mittels welcher eine auf den Ventilkolben 6 wirkende Haltekraft erzeugbar ist. Die Magnetspule 13 weist eine geringe Baugröße auf, da das Offenhalten des Hauptventils 3 keine große Kraft erfordert. Dies gilt insbesondere, da bei vollständiger Entdrosselung des Hauptventils 3 der Luftspalt zwischen der Magnetspule 13 und dem Ventilkolben 6 sehr klein ist.

Zum Schließen des Absperrventils 1 wird die Bestromung der Magnetspule 17 des Steuerventils 4 beendet, so dass eine Schließfeder 20 den Magnetanker 18 einschließlich des Ventilelements 19 in die jeweilige Ausgangslage zurückstellt und das Steuerventil 4 schließt. Bei geschlossenem Steuerventil 4 kann kein Gas mehr über die Ablaufdrossel 11 aus dem Steuerraum 8 abströmen, sondern lediglich Gas über eine Zulaufdrossel 9, die den Steuerraum 8 mit dem Speichervolumen 10 des Druckgasbehälters 2 verbindet, in den Steuerraum 8 hineinströmen, so dass der Druck im Steuerraum 8 wieder steigt. Der Druck übt eine schließende Kraft auf den Ventilkolben 6 des Hauptventils 3 aus, die gemeinsam mit der Federkraft der Feder 15 zum Schließen des Hauptventils 3 führt.

Um die dem Ventilkolben 6 des Hauptventils 3 zugeordnete Magnetspule 13 vom Magnetkreis des Steuerventils 4 zu trennen, ist zwischen dem Steuerventil 4 und dem Ventilgehäuse 14 ein Axialspalt 21 vorgesehen, in dem ein scheibenförmiger Körper 22 aus einem nichtmagnetischen Material angeordnet ist.

Das in der Figur dargestellte Absperrventil 1 ist einfach aufgebaut und benötigt wenig Bauraum, so dass es im Bereich eines Behälterauslasses 23 in den Druckgasbehälter 2 integriert werden kann.

## Patentansprüche

1. Absperrventil (1) für Wasserstofftanksysteme mit mindestens einem Druckgasbehälter (2), umfassend ein Hauptventil (3) und ein Steuerventil (4) zur Steuerung des Hauptventils (3), wobei das Hauptventil (3) einen mit einem Ventilsitz (5) zusammenwirkenden, hin und her beweglichen Ventilkolben (6) aufweist, der an seinem dem Ventilsitz (5) abgewandten Ende (7) einen Steuerraum (8) begrenzt, der über eine Zulaufdrossel (9) an ein Speichervolumen (10) des Druckgasbehälters (2) angeschlossen und über eine Ablaufdrossel (11), je nach Schaltstellung des Steuerventils (4), mit einem Gasauslass (12) verbindbar ist, und wobei das Hauptventil (3) eine Magnetspule (13) aufweist, mittels welcher eine auf den Ventilkolben (6) wirkende Öffnungs- und/oder Haltekraft erzeugbar ist, **dadurch gekennzeichnet, dass** das Hauptventil (3) und das Steuerventil (4) koaxial angeordnet und durch einen Axialspalt (21) voneinander getrennt sind, in dem ein vorzugsweise scheibenförmiger Körper (22) aus einem nichtmagnetischen Material aufgenommen ist.

2. Absperrventil (1) nach Anspruch 1,
**dadurch gekennzeichnet, dass** die Magnetspule (13) ringförmig ausgeführt und koaxial zum Ventilkolben (6) angeordnet ist.

3. Absperrventil (1) nach Anspruch 1 oder 2,
**dadurch gekennzeichnet, dass** die Magnetspule (13) dem Ventilkolben (6) am Steuerraum (8) gegenüberliegt.

4. Absperrventil (1) nach einem der vorhergehenden Ansprüche,
**dadurch gekennzeichnet, dass** die Magnetspule (13) in ein Ventilgehäuse (14) integriert ist, das den Steuerraum (8) begrenzt und die Ablaufdrossel (11) ausbildet, die vorzugsweise durch die Magnetspule (13) hindurchgeführt ist.

5. Absperrventil (1) nach einem der vorhergehenden Ansprüche,
**dadurch gekennzeichnet, dass** der Ventilkolben (6) des Hauptventils (3) in Richtung des Ventilsitzes (5) von der Federkraft einer Feder (15) beaufschlagt ist, die vorzugsweise einerseits am Ventilkolben (6), andererseits an einer Dichthülse (16) abgestützt ist, die zur Begrenzung des Steuerraums (8) das Ende (7) des Ventilkolbens (6) umgibt.

6. Absperrventil (1) nach einem der vorhergehenden Ansprüche,
**dadurch gekennzeichnet, dass** das Steuerventil (4) elektromagnetisch betätigbar ist und eine ringförmige Magnetspule (17) zur Einwirkung auf einen Magnetanker (18) aufweist, der mit einem Ventilelement (19) des Steuerventils (4) gekoppelt ist oder ein Ventilelement (19) ausbildet.

7. Absperrventil (1) nach einem der vorhergehenden Ansprüche,
**dadurch gekennzeichnet, dass** das Steuerventil (4) eine Schließfeder (20) umfasst, die vorzugsweise an dem Magnetanker (18) axial abgestützt ist.

8. Druckgasbehälter (2) für ein Wasserstofftanksystem mit einem Absperrventil (1) nach einem der vorhergehenden Ansprüche, wobei vorzugsweise das Absperrventil (2) im Bereich eines Behälterauslasses (23) angeordnet ist.

9. Wasserstofftanksystem mit mindestens einem Druckgasbehälter (2) und einem Absperrventil (1) nach einem der Ansprüche 1 bis 7 zum Absperren des Druckgasbehälters (2).

## Claims

1. Shut-off valve (1) for hydrogen tank systems with at least one compressed gas tank (2), comprising a main valve (3) and a control valve (4) for controlling the main valve (3), wherein the main valve (3) has a reciprocating valve piston (6) which interacts with a valve seat (5) and delimits, at its end (7) facing away from the valve seat (5), a control chamber (8) which is connected via an inlet throttle (9) to a storage volume (10) of the compressed gas tank (2) and can be connected to a gas outlet (12) via an outlet throttle (11), depending on the switching position of the control valve (4), and wherein the main valve (3) has a solenoid coil (13), by means of which an opening and/or holding force acting on the valve piston (6) can be generated, **characterized in that** the main valve (3) and the control valve (4) are arranged coaxially and are separated from each other by an axial gap (21), in which a preferably disc-shaped body (22) made from a non-magnetic material is received.

2. Shut-off valve (1) according to Claim 1,
**characterized in that** the solenoid coil (13) is of annular configuration and is arranged coaxially with respect to the valve piston (6).

3. Shut-off valve (1) according to Claim 1 or 2,
**characterized in that** the solenoid coil (13) lies opposite the valve piston (6) on the control chamber (8).

4. Shut-off valve (1) according to one of the preceding claims,
**characterized in that** the solenoid coil (13) is integrated into a valve housing (14) which delimits the control chamber (8) and forms the outlet throttle (11) which is preferably passed through by the solenoid coil (13).

5. Shut-off valve (1) according to one of the preceding claims,
**characterized in that** the valve piston (6) of the main valve (3) is loaded in the direction of the valve seat (5) by the spring force of a spring (15) which is preferably supported firstly on the valve piston (6) and secondly on a sealing sleeve (16) which surrounds the end (7) of the valve piston (6) in order to delimit the control chamber (8).

6. Shut-off valve (1) according to one of the preceding claims,
**characterized in that** the control valve (4) is electromagnetically operable, and has an annular solenoid coil (17) for acting on a magnet armature (18) which is coupled to a valve element (19) of the control valve (4) or forms a valve element (19).

7. Shut-off valve (1) according to one of the preceding claims,
**characterized in that** the control valve (4) comprises a closing spring (20) which is preferably supported axially on the magnet armature (18).

8. Compressed gas tank (2) for a hydrogen tank system with a shut-off valve (1) according to one of the preceding claims, wherein the shut-off valve (2) is preferably arranged in the region of a container outlet (23).

9. Hydrogen tank system with at least one compressed gas tank (2) and a shut-off valve (1) according to one of Claims 1 to 7 for shutting off the compressed gas tank (2).

## Revendications

1. Vanne d'arrêt (1) pour systèmes de réservoirs d'hydrogène ayant au moins un réservoir de gaz comprimé (2), comprenant une vanne principale (3) et une vanne de commande (4) pour commander la vanne principale (3), la vanne principale (3) présentant un piston de vanne (6) mobile en va-et-vient, coopérant avec un siège de vanne (5) et délimitant, à son extrémité (7) opposée au siège de vanne (5) une chambre de commande (8) qui est reliée, par l'intermédiaire d'un étranglement d'admission (9), à un volume de stockage (10) du réservoir de gaz comprimé (2) et qui est apte à être reliée, par l'intermédiaire d'un étranglement d'échappement (11), selon la position de commutation de la vanne de commande (4), à une sortie de gaz (12), et la vanne principale (3) comprenant une bobine magnétique (13) au moyen de laquelle une force d'ouverture et/ou de maintien agissant sur le piston de vanne (6) est apte à être générée, **caractérisée en ce que** la vanne principale (3) et la vanne de commande (4) sont agencées coaxialement et séparées l'une de l'autre par une fente axiale (21) dans laquelle est logé un corps (22), de préférence en forme de disque, constitué d'un matériau non magnétique.

2. Vanne d'arrêt (1) selon la revendication 1,
**caractérisée en ce que** la bobine magnétique (13) est réalisée en forme d'anneau et est agencée coaxialement au piston de vanne (6).

3. Vanne d'arrêt (1) selon la revendication 1 ou la revendication 2,
**caractérisée en ce que** la bobine magnétique (13) est située à l'opposé du piston de vanne (6), au niveau de la chambre de commande (8).

4. Vanne d'arrêt (1) selon l'une des revendications précédentes,
**caractérisée en ce que** la bobine magnétique (13) est intégrée dans un boîtier de vanne (14) qui délimite la chambre de commande (8) et forme l'étranglement d'échappement (11) qui est de préférence traversé par la bobine magnétique (13).

5. Vanne d'arrêt (1) selon l'une des revendications précédentes,
**caractérisée en ce que** le piston (6) de la vanne principale (3) est sollicité en direction du siège de vanne (5) par la force élastique d'un ressort (15) qui est de préférence fixé d'une part au piston (6) de la vanne et d'autre part sur un manchon d'étanchéité (16) qui entoure l'extrémité (7) du piston de vanne (6) afin de délimiter la chambre de commande (8).

6. Vanne d'arrêt (1) selon l'une des revendications précédentes,
**caractérisée en ce que** la vanne de commande (4) est actionnable électromagnétiquement et comprend une bobine magnétique annulaire (17) destinée à agir sur une armature magnétique (18) qui est reliée à un élément de vanne (19) de la vanne de commande (4) ou forme un élément de vanne (19).

7. Vanne d'arrêt (1) selon l'une des revendications précédentes,
**caractérisée en ce que** la vanne de commande (4) comprend un ressort de fermeture (20) qui est de préférence en appui axial sur l'armature magnétique (18).

8. Réservoir de gaz comprimé (2) pour un système de réservoir d'hydrogène, comprenant une vanne d'arrêt (1) selon l'une des revendications précédentes, la vanne d'arrêt (2) étant de préférence agencée dans la zone d'une sortie de réservoir (23).

9. Système de réservoir d'hydrogène, comprenant au moins un réservoir de gaz comprimé (2) et une vanne d'arrêt (1) selon l'une des revendications 1 à 7 pour fermer le réservoir de gaz comprimé (2).
